# EUROPÄISCHE PATENTSCHRIFT

(11) **EP 0 767 100 B1**
(45) Veröffentlichungstag und Bekanntmachung des Hinweises auf die Patenterteilung: **11.09.2002**
(21) Anmeldenummer: 96890155.3
(22) Anmeldetag: 01.10.1996
(51) Int. Cl.: B64D 11/00

(54) **Sicherheitsvorrichtung für im Flugzeuginnenraum angebrachte Behälter, sowie Behälter für die Luftfahrtindustrie**
Safety device for container mounted inside an aircraft and container used by the aeronautical industry
Dispositif de sécurité pour un conteneur associé à la cellule d'un avion, ainsi qu'un conteneur déstiné à l'industrie aéronautique

(30) Priorität: 04.10.1995 AT 164895
(43) Veröffentlichungstag der Anmeldung: 09.04.1997
(73) Patentinhaber: Fischer Advanced Composite Components AG, 4910 Ried im Innkreis (AT)
(72) Erfinder: Stephan, Walter A., Dipl.-Ing., 4973 St. Martin/Innkreis (AT)
(74) Vertreter: Köhler-Pavlik, Johann, Dipl.-Ing.

(56) Entgegenhaltungen:
- DE-B- 1 278 850
- US-A- 2 735 377
- US-A- 3 377 044
- US-A- 5 108 048
- US-A- 5 377 856

## Beschreibung

Die Erfindung betrifft einen Überkopf-Gepäckablagebehälter im Flugzeuginnenraum mit einer Sicherheitsvorrichtung zur Sicherung vor Herabstürzen mit zumindest einem ersten Verbindungsteil, welcher einerseits zur Verbindung zum Flugzeugrumpf und andererseits zur Verbindung mit dem Überkopf-Gepäckablagebehälter ausgebildet ist.

In der Luftfahrtindustrie wird in besonderem Maß auf die sicherheitstechnisch optimale Ausgestaltung der verwendeten Bauteile Wert gelegt. Dies betrifft auch die dauerhafte oder auch nur zeitweise Anbringung von Bauteilen oder Bauteilgruppen im Flugzeuginnenraum, beispielsweise die Fixierung von Transportbehältern, Trolleys oder auch die Aufhängung der Überkopf-Gepäckablagefächer am Flugzeugrumpf. Die Bauteile, welche mit dem Gepäck der Passagiere belastet werden, sind mechanisch für zwei Situationen ausgelegt. Die eine Situation ist der normale reguläre Flugbetrieb, in dem die Bauteile bestimmten Belastungen, z.B. durch Luftböen, ohne Beschädigung, z.B. 60.000 Flugstunden, d.h. z.B. 60.000 Flugzyklen Starts und Landungen überstehen. Wird das Flugzeug durch eine Luftböe bewegt, entsteht durch die Trägheit des Gepäcks eine bestimmte Belastung, z.B. die sechsfache Erdbeschleunigung. Dies ist ein z.B. im Heck oder im Vorderteil von Flugzeugen üblicher Belastungsfall. Der zweite Belastungsfall tritt im Notfall, z.B. bei einem Crash auf. Dabei müssen etwa die 1,5fachen Belastungen, welche während eines Flugbetriebes ausgehalten werden, überstanden werden. Eine Zerstörung der Bauteile selbst ist dabei zulässig, die Passagiere dürfen aber dadurch keinen Schaden erleiden. Die entsprechend den derzeit gültigen Spezifikationen hergestellten Gepäckablagebehälter sind z.B. für statische Lasten von 9g (9fache Erdbeschleunigung) in Vorwärtsrichtung und 8,5g nach unten ausgelegt. Gegenwärtig, mit technisch vertretbarem Gewichtsaufwand hergestellte Aufhängungssysteme sind natürlich für solche Belastungen ausgelegt, damit sie diesen standhalten.

Die US 5 108 048 A beschreibt beispielsweise einen Überkopf-Gepäckablagebehälter für Flugzeuge, der für eine rasche und einfache Montage und Demontage speziell ausgebildet ist. Eine Sicherheitsvorrichtung zum Personenschutz bei Überbeanspruchungen ist nicht vorgesehen.

Eine Sicherung zur Befestigung von am Boden eines Flugzeuges gelagerten Behältern ist beispielsweise in der US 3 377 044 A beschrieben, wobei eine Einrichtung zur Vernichtung von Bewegungsenergie für erhöhte Sicherheit sorgt. Für Überkopf-Gepäckablagebehälter, welche hängend angeordnet sind, würde eine deartige Einrichtung aber nur unzureichende Sicherheit bieten.

Heute werden immer mehr und immer schwerere Gepäckstücke, z.B. Handkoffer, Laptops, Foto- und Videoausrüstungen, etc. als Handgepäck in die Flugzeugkabine mitgenommen. Dies führt zu einer hohen effektiven Nutzung (hohes spezifisches Gewicht) der Gepäckablagefächer, sodaß das zulässige Gewicht oft nur eine theoretische Grenze darstellt. Im Ernstfall, beispielsweise während einer Notlandung, können die Gepäckstücke zu gefährlichen Geschoßen werden. In diesem Fall können die Gepäckablagefächer bzw. die Behälter an sich unbeschädigt bleiben, jedoch deren Aufhängungen beschädigt werden und die Fächer auf die Passagiere herabfallen. Auch andere Behältern, welche an Bord von Flugzeugen verwendetet werden, werden spezifisch immer höher ausgnutzt, wie z.B. Trolleys zur Aufnahme der Speisen und Getränke für die Passagiere. Dem heutigen Verhalten der Passagiere und den höheren Anforderungen angepaßte Behälter mit höheren zulässigen Belastungen erfordern daher speziell verbesserte Halterungen, die wegen der am Limit stehenden Entwicklung herkömmlicher Systeme komplett neu entwickelt werden müßen. Dies führt jedoch nicht nur zu höheren Entwicklungskosten sondern auch zu höherem Aufwand bei der Fertigung und Montage sowie zu einer unerwünschten Gewichtserhöhung der Aufhängungssysteme.

Aufgabe der Erfindung ist die Schaffung von Maßnahmen durch die während eines Absturzes, einer Notlandung oder einer anderen Gefahrensituation des Flugzeuges, bei welchen die Überkopf-Gepäckablagefachbehälter herabstürzen, diese nicht auf die Köpfe der Passagiere fallen und gegebenenfalls auch das Herabstürzen des Behälters gebremst wird und die dabei entstehende Energie über einen längeren Zeitraum vernichtet wird. Solche Maßnahmen waren bisher nicht üblich. Das Ziel der Erfindung besteht darin, die Sicherheit der Passagiere zu steigern, indem die Belastungsgrenzen von bisher 9facher Erdbeschleunigung (9g) auf beispielsweise 16g zu erhöhen, ohne dabei das Flugzeug mit höherem Gewicht bauen zu müssen. Mit Hilfe der Erfindung soll eine maximal mögliche Sicherheit für die Flugzeuginsassen bei Überladung oder Überbeanspruchung der im Flugzeuginnenraum verwendeten Überkopf-Gepäckablagebehälter, vorzugsweise der Überkopf-Gepäckablagefächer in Extremsituationen gewährleistet werden kann.

Zur Lösung der erfindungsgemäßen Aufgaben dienen die Merkmale des kennzeichnenden Teils des Patentanspruchs 1. Vorteilhafte Ausführungsformen sind in den abhängigen Unteransprüchen beschrieben. Die erfindungsgemäße Konstruktion gewährleistet in Extremsituationen, wie Notlandungen oder extremen Flugsituationen eine maximale Sicherheit der Passagiere durch eine Teilung der Aufgabe der herkömmlichen Aufhängung des Behälters und der Sicherheitsvorrichtung.

Dabei ist jede Art der Fixierung des Behälters, allenfalls auch eine nur temporäre Befestigung an einer beliebigen Stelle am Flugzeugrumpf als Aufhängung anzusehen. Eine herkömmliche Aufhängung wird durch eine moment- und spielfreie Aufhängung gebildet, während das Kraftumlenkungselement der Sicherheitsvorrichtung an bestehenden oder neu zu schaffenden Aufhängungspunkten rumpfseitig befestigt werden kann, wobei eine Bewegungsfreiheit von bis zu einigen Millimetern erlaubt ist. Durch das Kraftumlenkungselement wird die Massenkraft von der Bodenplatte, den Seitenwänden oder Türen des Behälters in die tragende Konstruktion des Flugzeugs umgelenkt. Die Anzahl der Kraftumlenkungselemente und der Befestigungspunkte kann dabei auf die maximal auftretende Beschleunigung abgestimmt werden.

Weitere Merkmale und Vorteile der Erfindung werden in der nachfolgenden Beschreibung unter Bezugnahme auf die beigefügten Zeichnungen eines Ausführungsbeispiels der Erfindung näher erläutert.

Dabei zeigen
- Fig. 1: Zwei Behälter einer Reihe von Überkopf-Gepäckablagefächern in schematischer Ansicht von der Seite,
- Fig. 1a: eine Schnittbilddarstellung entlang der Schnittlinie Ia-Ia aus Fig. 1,
- Fig. 1b: eine Variante der Ausführungsform gemäß Fig. 1a mit nur einem Gurt,
- Fig. 2: eine Detailansicht eines zur Vernichtung von Bewegungsenergie ausgelegten Gurtabschnittes,
- Fig. 3: eine Befestigungsvariante der erfindungsgemäßen Sicherheitsvorrichtung am Flugzeugrumpf in Schnittbilddarstellung,
- Fig. 4a: eine Stirnansicht des Passagierraumes eines Flugzeuges während eines normalen Flugbetriebs, wobei die Überkopf-Gepäckablagefachbehälter im linken Teil A mit der erfindungsgemäßen Sicherheitsvorrichtung und im rechten Teil B ohne diese ausgestattet sind,
- Fig. 4b: die Darstellung gemäß Fig. 4a nach einer Belastung während eines Notfalls, z.B. eines Absturzes.

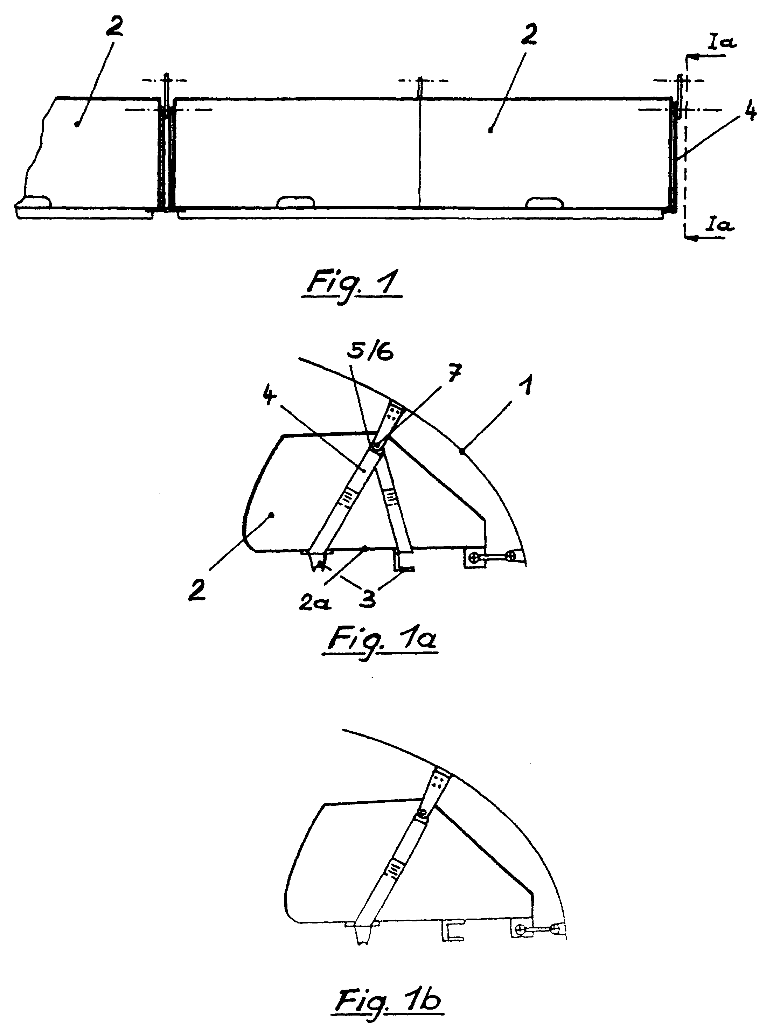

Fig. 1 zeigt zwei Überkopf-Gepäckablagefachbehälter 2, von welchen eine ganze Reihe zu beiden Seiten des Passagierraumes im wesentlichen entlang seiner gesamten Länge vorgesehen sind.

In Fig. 1a ist ein Teil des Flugzeugrumpfes 1 dargestellt, an dem die Überkopf-Gepäckablagefachbehälter 2 gemäß der Erfindung gesichert aufgehängt, sind. Die an sich bereits durch ihren Aufbau mechanisch sehr stabile Bodenplatte 2a der Behälter 2 ist durch in Längsrichtung verlaufende Verstrebungen 3 versteift, welche meist als Aluminiumprofile ausgebildet sind und auch die Sauerstoffversorgung und weitere Leitungen oder Zusatzaggregate tragen können. An der Bodenplatte 2a sind fest oder z.B. durch Verschraubung, Bajonettverbindungen oder dergleichem lösbar vorzugweise zwei Gurte 4 befestigt, die den Behälter 2 im Notfall nach Bruch oder Versagen der normalen Aufhängungssysteme gegen ein Herabfallen auf die Passagiere sichern. Die Anzahl und Ausführung der Gurte kann auf die maximal abzufangende Beschleunigung abgestimmt werden.

Entsprechend Fig. 1b ist auch die Verwendung nur eines Gurts 4 möglich. Die Gurte 4 verlaufen entlang der Behälterwandung unter Umlenkung um Ecken oder Rundungen des Behälters 2 von der versteiften Bodenplatte 2a, (vorteilhafterweise vom mechanisch stabilsten Behälterabschnitt) zur Befestigungsstelle 5. An der Befestigungsstelle 5 sind die Gepäckablagefachbehälter 2 auch über die herkömmlichen Befestigungslaschen oder -bolzen aufgehängt. Bei Umlenkung um Ecken oder Rundungen des Behälters 2 kommt der Flexibilität des Kraftumlenkungselements eine besondere Bedeutung zu, um eine möglichst ungehinderte und platzsparende Längenveränderung zu ermöglichen. Die Befestigungsstellen 5 sind über Tragelemente 6 an Anlenkpunkten 7 am Flugzeugrumpf 1 aufgehängt.

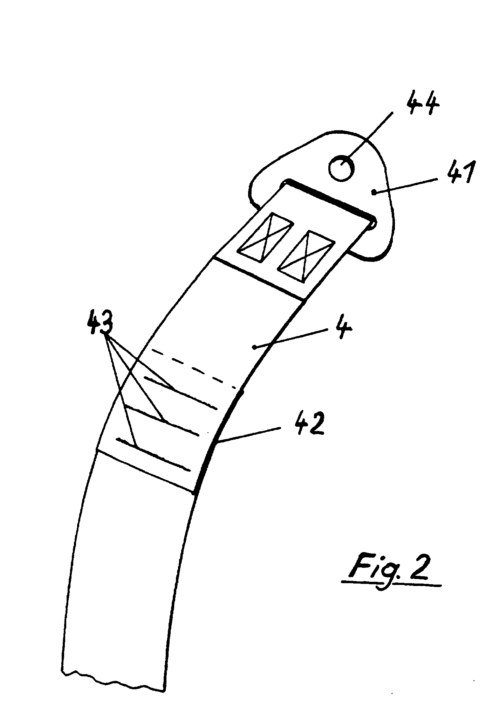

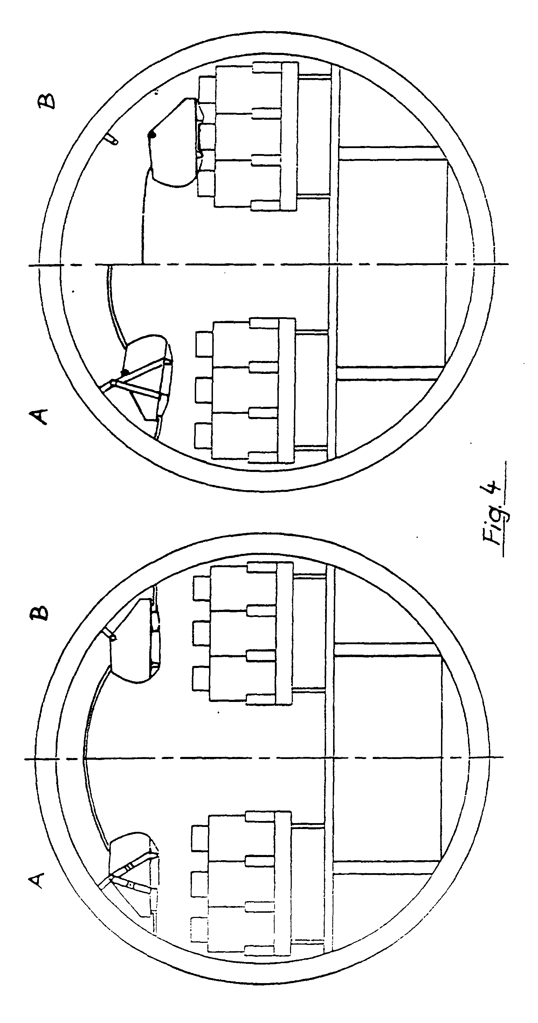

Bei der Ausführungsform des Gurts 4 gemäß Fig. 2 ist der besonders reißfeste, kraftumlenkende Gurt 4 mit einer Aufhängungsplatte 41 versehen, die in einer genähten Lasche des Gurts befestigt ist. Über die Aufhängungsplatte 41 wird der Gurt 4 an der Befestigungsstelle 5 des Gepäckablagefaches 2 oder an einer separaten Befestigungsstelle für die erfindungsgemäße Sicherheitsvorrichtung mit nur geringer Bewegungsfreiheit aufgehängt. Durch eine allenfalls irreversible Längenveränderung bei Überschreiten einer durch die Gurtmaterialien und den Gurtaufbau vorgegebenen Zugbelastungsgrenze wird Bewegungsenergie vernichtet und ähnlich einem Sicherheitsgurt in Kraftfahrzeugen das Herabfallen der Behälter 2 auf die Köpfe der Passagiere (siehe Fig. 4b, Teil B) verhindert. Anstelle eines längenveränderlichen Guns 4 können auch zumindest zwei Teilstücke des Kraftumlenkungselementes mit konstanter Länge vorgesehen sein, die über eine Verbindungseinrichtung gekoppelt sind, welche die Längenänderung unter Energievernichtung ermöglicht. Damit können die Behälter Belastungen bis zur 16fachen und 20fachen Erdbeschleunigung (16g bis 20g) aushalten, ohne daß das Gepäckablagefach im Bereich seiner Aufhängungspunkte mechanisch auf diese Belastung ausgelegt werden muß. womit auch dessen Gewicht wesentlich erhöht würde. Bei solchen Belastungen würden herkömmliche Befestigungs- und Aufhängesysteme mit Sicherheit ausreißen oder versagen. Um die Belastung des Gepäckablagefachbehälters 2 im Notfall über einen längeren Zeitraum zu verteilen und derart über die damit verbundene Verringerung der Beschleunigung auch die Kraft auf die Befestigungsstellen 5 zu verringern, ist das Kraftumlenkungselement 4 mit einer Einrichtung 42 zur Vernichtung der Bewegungsenergie versehen. Diese wird in der dargestellten Ausführungsform zum Beispiel durch einen S- oder Z-förmig übereinanderliegenden Gurtabschnitt gebildet, der in dieser Konfiguration durch Nähte 43 fixiert ist. Die Nähte 43 sind so ausgelegt, daß sie bei einer vorbestimmten Belastung aufreißen und somit die Verlängerung des wirksamen Abschnittes des Gurtes 4 ermöglichen, (siehe Fig. 4b, Teil A). Eine derartige Verlängerung des Gurts 4 und die damit verbundene Absenkung der Gepäckablagefachbehälter 2 um etwa 2 bis 3 cm ist im Notfall tolerierbar. Eine Bohrung 44 in der Aufhängungsplatte 41 dient zur Aufhängung bzw. Verbindung mit den Anlenkpunkten 7 am Flugzeugrumpf 1. Anstelle des oder jeden Gurts 4 kann auch ein UD-Gewebe um den Gepäckablagefachbehälter 2 vorgesehen und mit entsprechenden Laschen zur Aufhängung am Flugzeugrumpf versehen sein. Die erfindungsgemäße Sicherheitsvorrichtung erhöht das Gewicht der Gepäckablagefachbehälter lediglich um ca. 3 bis 4%, während eine gleichartige Verstärkung der Befestigungsstellen und Aufhängungsvorrichtungen ca. 20% Gewichtssteigerung mit sich bringen würde.

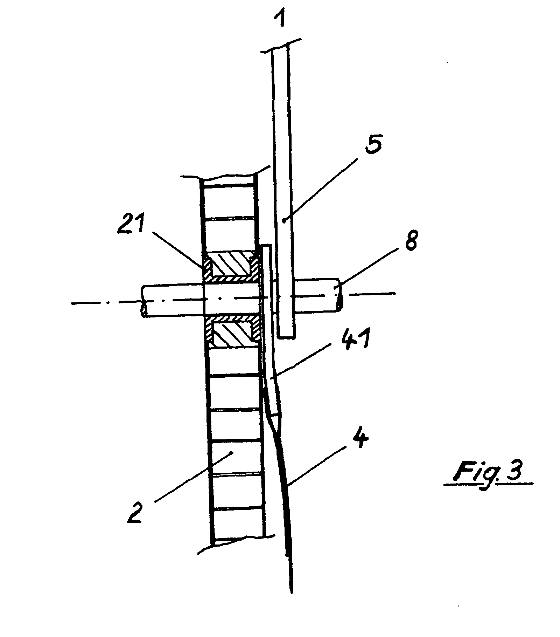

Fig. 3 zeigt eine Teilansicht der Erfindung an der Befestigungsstelle 5 im Schnittbilddarstellung. Die Befestigungsstelle 5 ist als Lasche ausgebildet, welche am Flugzeugrumpf 1 angebracht ist. In der Seitenwand des Gepäckfaches 2 ist in herkömmlicher Weise und ohne speziell verstärkte Auslegung eine Buchse 21 eingesetzt und mit dieser verklebt oder auf andere Weise verbunden. Durch einen Bolzen 8, der durch eine Öffnung der Lasche 5 und die Buchse 21 geführt ist, wird das Gepäckablagefach 2 am Flugzeugrumpf 1 aufgehängt. Der Gurt 4 ist ebenfalls an der Lasche 5 befestigt, wobei der Bolzen 8 auch durch die Öffnung 44 geführt ist. In einem extremen Belastungsfall wird die Buchse 21 ausreißen, während die sehr stabil ausgeführte und angebrachte Lasche 5 intakt bleibt und somit auch der Gurt 4 hält. Der Gurt 4 hält, allenfalls nach einer Verlängerung durch die Einrichtung zur Vernichtung von Bewegungsenergie, den Gepäckablagefachbehälter 2 sicher über den Köpfen der Passagiere (siehe Fig. 4a. Teil A). Bei nicht so stabiler Ausführung der Lasche 5 können auch zusätzliche Befestigungsstellen für die erfindungsgemäße Sicherheitsvorrichtung bzw. den Sicherheitsvorrichtungsteil des Behälters 2 vorgesehen sein, wobei hierbei größere Freiheit bezüglich der Anordnung und Anzahl dieser Befestigungsstellen gegeben ist.

Selbstverständlich können je nach Bedarf im Rahmen der Erfindung gemäß Anspruch 1 verschiedene konstruktive Abänderungen vorgenommen werden. So kann zum Beispiel die Anzahl der Verstrebungen 3 und ihre Anordnung dem Bedarf entsprechend anders ausgeführt sein.

## Patentansprüche

1. Überkopf-Gepäckablagebehälter im Flugzeuginnenraum mit einer Sicherheitsvorrichtung zur Sicherung vor Herabstürzen mit zumindest einem ersten Verbindungsteil, welcher einerseits zur Verbindung zum Flugzeugrumpf und andererseits zur Verbindung mit dem Überkopf-Gepäckablagebehälter (2) ausgebildet ist, **dadurch gekennzeichnet, daß** zumindest ein zweiter Verbindungsteil vorgesehen ist, der zur Verbindung mit der Bodenplatte (2a) des Überkopf-Gepäckablagebehälters (2) ausgebildet ist, welcher zumindest eine zweite Verbindungsteil mit dem oder jedem ersten Verbindungsteil durch zumindest ein Kraftumlenkungselement (4) mit zumindest einer Einrichtung (42) zur Vernichtung von Bewegungsenergie verbunden ist.

2. Überkopf-Gepäckablagebehälter nach Anspruch 1, **dadurch gekennzeichnet, daß** das Kraftumlenkungselement (4) flexibel ist.

3. Überkopf-Gepäckablagebehälter nach Anspruch 1 oder 2, **dadurch gekennzeichnet, daß** das Kraftumlenkungselement (4) bei Überschreiten einer vorbestimmten Zugbelastung in vorgegebenen Grenzen und vorzugsweise irreversibel längenveränderlich ist.

4. Überkopf-Gepäckablagebehälter nach einem der Ansprüche 1 bis 3, **dadurch gekennzeichnet, daß** das Kraftumlenkungselement (4) durch zumindest einen Gurt gebildet ist.

5. Überkopf-Gepäckablagebehälter nach Anspruch 4, **dadurch gekennzeichnet, daß** der Gurt an zumindest einer Stelle zur Bildung der Einrichtung (42) zur Vernichtung von Bewegungsenergie in Schleifen gelegt und in dieser Form mit zum Aufreißen bestimmten Nähten (43) fixiert ist.

6. Überkopf-Gepäckablagebehälter nach einem der Ansprüche 1 bis 5, **dadurch gekennzeichnet, daß** das Kraftumlenkungselement (4) durch ein unidirektionales Gewebe mit Befestigungslaschen zur Verbindung mit dem Flugzeugrumpf (1) gebildet ist.

## Claims

1. An overhead luggage stowage container in the interior of an aircraft, comprising a safety device to prevent the container from dropping down, with at least one first connecting member which, on the one hand, is designed for a connection to the fuselage and, on the other hand, for a connection to the overhead luggage stowage container (2), **characterised in that** at least one second connecting member is provided, which is designed for a connection to the bottom plate (2a) of the overhead luggage stowage container (2), which at least one second connecting member is connected with the or each first connecting member via at least one force deflecting element (4) comprising at least one device (42) to absorb kinetic energy.

2. An overhead luggage stowage container according to claim 1, **characterised in that** the force deflecting element (4) is flexible.

3. An overhead luggage stowage container according to claim 1 or 2, **characterised in that** the length of the force deflecting element (4) is, preferably irreversibly, changeable within certain limits if a predetermined tensile load is exceeded.

4. An overhead luggage stowage container according to any one of claims 1 to 3, **characterised in that** the force deflecting element (4) is formed by at least one belt.

5. An overhead luggage stowage container according to claim 4, **characterised in that** for forming the device (42) to absorb kinetic energy, the belt in at least one place thereof is formed into loops and fixed **in that** form with seams (43) intended to burst.

6. An overhead luggage stowage container according to any one of claims 1 to 5, **characterised in that** the force deflecting element (4) is formed by a unidirectional fabric having attaching straps for connection to the fuselage (1).

## Revendications

1. Conteneur de réception de bagages au-dessus de la tête des passagers dans l'intérieur d'un avion, comportant un dispositif de sécurité pour empêcher leur déversement et qui est pourvu d'au moins une première partie de liaison, laquelle est réalisée pour être d'un côté en liaison avec le fuselage de l'avion et de l'autre côté en liaison avec le conteneur (2) de réception de bagages au-dessus de la tête des passagers, **caractérisé en ce qu'**il est prévu au moins une seconde partie de liaison qui est adaptée pour être reliée à la plaque de fond (2a) du conteneur (2) de réception des bagages au-dessus de la tête des passagers, laquelle au moins une seconde partie de liaison est reliée à l'une ou à chaque première partie de liaison par au moins un élément de déviation de force (4) pourvu d'au moins un dispositif (42) pour annihiler l'énergie cinétique.

2. Conteneur selon la revendication 1 **caractérisé en ce que** l'élément (4) de déviation de force est flexible.

3. Conteneur selon la revendication 1 ou 2 **caractérisé en ce que** l'élément de déviation de force (4) peut subir des changements de longueur dans des limites prédéterminées et de préférence irréversibles en cas de dépassement d'une charge de traction prédéterminée.

4. Conteneur selon l'une des revendications 1 à 3 **caractérisé en ce que** l'élément de déviation de force (4) est constitué par au moins une sangle.

5. Conteneur selon la revendication 4 **caractérisé en ce que** la sangle est disposée en boucle à au moins un emplacement pour la formation du dispositif (42) d'annihilation de l'énergie cinétique et est fixée dans cette forme contre l'arrachement par des coutures (43).

6. Conteneur selon l'une des revendications 1 à 5 **caractérisé en ce que** l'élément de déviation de force (4) est constitué par un tissu unidirectionnel pourvu de pattes de fixation pour la liaison avec le fuselage (1) de l'avion.
